Europäisches Patentamt

(19) European Patent Office

Office européen des brevets

(11) Publication number: **0 011 342**
**B1**

# EUROPEAN PATENT SPECIFICATION

(45) Date of publication of patent specification: **14.03.84**  (51) Int. Cl.³: **F 16 H 11/06**

(21) Application number: **79200659.5**

(22) Date of filing: **09.11.79**

(54) A method and apparatus for controlling an infinitely variable transmission of a motor vehicle.

(30) Priority: **13.11.78 NL 7811192**

(43) Date of publication of application:
**28.05.80 Bulletin 80/11**

(45) Publication of the grant of the patent:
**14.03.84 Bulletin 84/11**

(84) Designated Contracting States:
**AT BE CH DE FR GB IT LU NL SE**

(56) References cited:
**BE - A - 665 411**
**FR - A - 2 340 486**
**FR - A - 2 340 487**

(73) Proprietor: **Van Doorne's Transmissie B.V.**
**Dr. Hub van Doorneweg 120 Postbus 500**
**NL-5026 RA Tilburg (NL)**

(72) Inventor: **Van Deursen, Petrus Hendricus**
**Hoendiep 36**
**Deurne (NL)**

(74) Representative: **Louet Feisser, Arnold Abraham**
**Alfred**
**Postbus 500**
**NL-5000 AM Tilburg (NL)**

Courier Press, Leamington Spa, England.

# A method and apparatus for controlling an infinitely variable transmission of a motor vehicle

The invention relates to a method of controlling the transmission ratio of an infinitely variable transmission of a motor vehicle, the transmission ratio being regulated to set the engine speed dependent on an external signal.

Such a method is known from British patent 1,525,674 describing an apparatus wherein a hydraulic valve for setting the transmission ratio is loaded at one side by a fluid pressure which, through a Pitot tube, is built up depending on the engine speed. At the other side the valve is loaded by a spring which is biased depending e.g. on the inlet manifold pressure or the position of the throttle pedal. To this effect the member biasing the spring is connected to a vacuum cylinder, respectively to the throttle pedal of the throttle valve.

Such a method is also known from Belgium patent 665,411, describing a centrifugal control causing a predetermined engine speed at each position of the throttle pedal, except for a low engine speed. There is an additional hydraulic valve which causes an increased transmission ratio (input speed/output speed ratio) at low engine speed. In such an apparatus the transmission ratio of the transmission is always so set and adjusted that the engine speed assumes a given value, depending on an external signal e.g. the position of the throttle pedal, and naturally insofar this is possible within the available range of transmission ratios.

In order to approve the driveability, in particular the reaction of a vehicle with infinitely variable transmission, considerable research has been carried out and already various proposals have been made, such as the incorporation of certain delays in the control system and influencing of the transmission ratio by engine torque or tractive resistance of the vehicle, etc. It is an object of the invention to improve the driveability of a motor vehicle with an infinitely variable transmission.

To this effect according to the invention the transmission ratio is regulated to set the engine speed dependent on both the external signal and the actual transmission ratio in such a way that the engine speed respectively increases or decreases when the input/output speed ratio of the transmission respectively decreases or increases.

By causing the magnitude of the engine speed to be set to be influenced partly by the actual transmission ratio, there is obtained the effect that upon acceleration or deceleration of the vehicle, or otherwise constant parameters (e.g. position throttle pedal) the engine speed increases, resp. decreases. Although the evaluation of the driveability of a motor vehicle is subjective, the effect of this influencing of the engine speed by the actual transmission ratio appears usually to be experienced positively.

Another advantage of the above influencing is the fact that when further opening the throttle, from a situation wherein the vehicle is driven quietly, there is more shift down of the transmission at a higher vehicle speed than at a lower vehicle speed. This is the case when initially the vehicle is driven in a situation wherein the engine speed is minimal, which for instance will be the case when driving at a constant speed between about 15 and 65 km per hour. The required driving power is then so small that the engine speed can be and will be minimal (e.g. 220 rev. per minute). If the throttle is further opened from such situation, i.e. the external signal commands that more motor power is desired for acceleration, the engine speed will increase, i.e. there will be a shift down if said opening of the throttle takes place to a sufficient degree, because to the new position of the throttle pedal (external signal) belongs an engine speed that is larger than said minimal one. This shifting down results in a higher engine speed, which engine speed, with the control according to the present invention, will be additionally increased at a lower input speed/output speed ratio. When driving with constant engine speed, a lower input speed/output speed ratio will mean a greater vehicle speed. Furthermore, a higher engine speed will mean more shift down. At a greater vehicle speed, consequently, shift down is more at a given degree of opening the throttle, which is a desired effect, since for a given acceleration at a greater vehicle speed, a larger motor power is required.

Another additional advantage of the influencing of the engine speed is the fact that the driver, upon stationary position of the throttle pedal, can hear from the noise of the engine whether the vehicle speed is constant or not, viz. in a manner corresponding to that with a motor vehicle having a stepped gearbox. It has been found that this is a rather important aspect of the driving comfort.

According another feature of the invention, the additional increase or decrease of the engine speed may be established when the external signal commands an increased engine speed for braking the vehicle. In such a method the additional influencing of the engine speed remains limited to certain situations wherein such a control offers special advantages, in particular when braking the vehicle by the engine, e.g. when driving downhill for a prolonged period.

In this respect it is advantageous that not only the engine speed is increased by a special intervention, whether or not in an adjustable degree, but a transmission ratio-depending engine speed offers special advantages. When the vehicle, at too low braking power of the engine, is increasing its speed when driving downhill (whereby during maintenance of the engine speed, shift up will take place) it is advantageous when the braking power of the engine is automatically increased by increase of the engine speed.

Furthermore, in a method wherein the output speed of the transmission is measured, according to the invention the engine speed may also be influenced by this measuring value. When driving the vehicle, as a matter of fact, at any given engine speed, the speed of the output or secondary shaft of the transmission (as well as the vehicle speed which is proportional thereto) is a measure for the actual transmission ratio (input speed/output speed ratio). Consequently, this value, with a control whereby the engine speed already exerts influence, may contain sufficient information for the transmission ratio-dependent adjustment of the engine speed. The measurement of the speeds may be effected electronically, mechanically as well as hydraulically in otherwise known manner.

Moreover, upon application of a transmission having a variable belt drive with pulleys provided with mutually movable, substantially conical sheaves, according to the invention the required engine speed can be also influenced by the axial position of one of the sheaves, which is a direct measure for the actual transmission ratio.

According to another feature of the invention, the influencing of the engine speed may be substantially inversely proportional to the transmission ratio.

The invention furthermore relates to an apparatus for controlling the transmission ratio of an infinitely variable transmission of a motor vehicle, provided with setting means for adjusting the transmission ratio dependent on an external signal and on the actual engine speed, and with sensor means for producing a ratio signal representing the actual transmission ratio, which apparatus according to the invention is characterized by control means for influencing said setting means by said ratio signal as to respectively increase or decrease additionally the engine speed at respectively a decrease or increase of the input/output speed ratio of the transmission.

Such a control device improves the driveability of the motor vehicle and moreover has other advantages, as already described.

The device may be provided with sensor means for measuring the output speed of the transmission, whereby according to a feature of the invention the control means influence the engine speed dependent on the measured value. It should be noted that this embodiment is not further elucidated in the drawings.

In a device for controlling the transmission ratio of a variable belt drive with pulleys provided with mutually axially movable, substantially conical sheaves, according to the invention, there are sensor means for detecting the axial position of one of the sheaves and control means to additionally influence the engine speed dependent on the detected position. position.

In a control device of the present type, the transmission ratio may be adjustable by means of a hydraulic valve provided with a valve body, which is movable under influence of the external signal and the actual engine speed. According to a feature of the invention, in such a device the position of the valve body may also be influenceable by the actual transmission ratio.

According to another feature in the invention the valve may be loaded on the one end by a force depending on the actual engine speed and on the other end by a spring whose tension depends on the axial position of an actuation member abutting thereagainst, whereby the position of the actuation member is also influenceable by the actual transmission ratio.

According to still another feature of the invention, said actuation member may thereby be displaceable by a lever, which on the one end is displaceable by a control cam whose position depends on e.g. the position of the throttle pedal (or throttle valve) and which on the other end is displaceable depending on the actual transmission ratio.

According to another feature of the invention the device for controlling the transmission ratio is provided with a variable belt drive with pulleys provided with mutually axially displaceable, substantially conical sheaves, furthermore with a sensor member for signalling the axial position of one of the sheaves, the lever may be also displaceable through the sensor.

In order to be able, if desired, to reduce vehicle speed by using the engine as a brake, the device provided with means for displacing the actuation member according to the invention, may be characterized by means which can be put into operation for separately displacing the actuation member depending on the actual transmission ratio for obtaining an increased engine speed.

According to the invention the means for displacing the actuation member may comprise a rotary control cam, and the means which can be put into operation may comprise a member rotatable coaxially with said control cam depending on the desired degree of engine speed increase, said member bringing a lever into contact with the actuation member, said lever being displaceable on the other end by a sensor member or detecting the actual transmission ratio.

A number of embodiments of the control device according to the invention will now be explained, by way of example, with reference to the accompanying drawings.

It should be noted that references to the drawings, made in the claims, are not to be construed as limiting the scope of a claim, but only as aids to an easier understanding.

Fig. 1 diagrammatically shows a first embodiment;

Fig. 2 shows the same influencing principle as Fig. 1 but applied in a different hydraulic control principle;

Figs. 3 and 4 show another embodiment, wherein the transmission ratio-dependent control can be put into operation separately, and and

Fig. 5 shows an embodiment that slightly differs from that of Figs. 3 and 4.

In the Figures corresponding parts are shown with identical reference numerals.

The embodiments shown diagrammatically in the Figures comprise a primary or input shaft 1, fitted with a stationary and an axially displaceable conical sheave 2, 3, which together form the primary pulley. The sheave 3 forms the piston of cylinder 5 comprising the cylinder space 4 and may be axially displaced by fluid supply and discharge via line 6. Furthermore, there is disposed a secondary or output shaft 7, likewise fitted with a stationary and an axially displaceable conical sheave 8, 9, which together form the secondary pulley. The sheave 9 is integrally connected to cylinder 10 wherein is disposed the piston 11 fixedly connected to the secondary shaft 7, so that cylindrical space 12 is enclosed. Fluid may be supplied and discharged to and from cylinder space 12 via line 13. About the primary and secondary pulley there is applied a V-shaped driving belt 14, which may be e.g. a reinforced or non-reinforced synthetic driving belt or a metal driving belt. By axially displacing the conical sheaves 3 and 9, the running diameters of the driving belt 14 about the two pulleys may be so changed that the difference in rotation speed of shafts 1 and 7 can be varied infinitely. The fluid pressures in cylinder spaces 4 and 12 moreover result in that the required tension is present in driving belt 14.

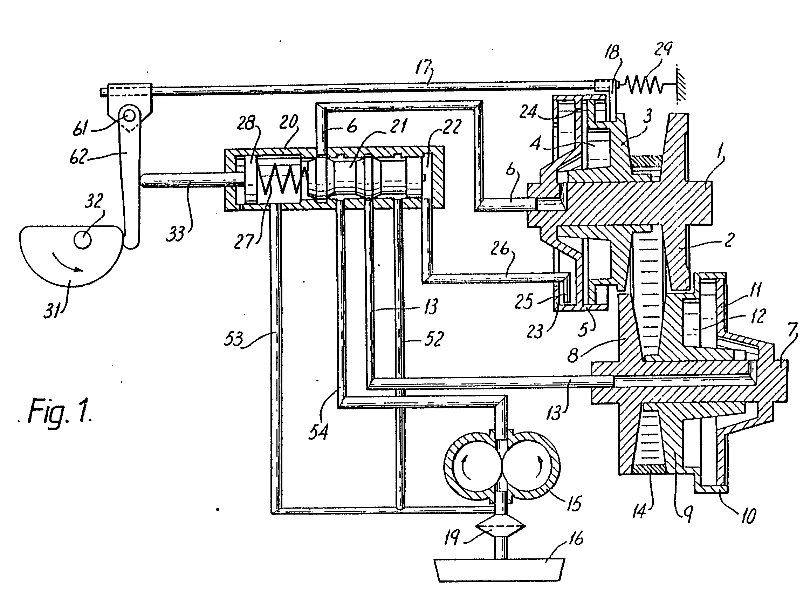

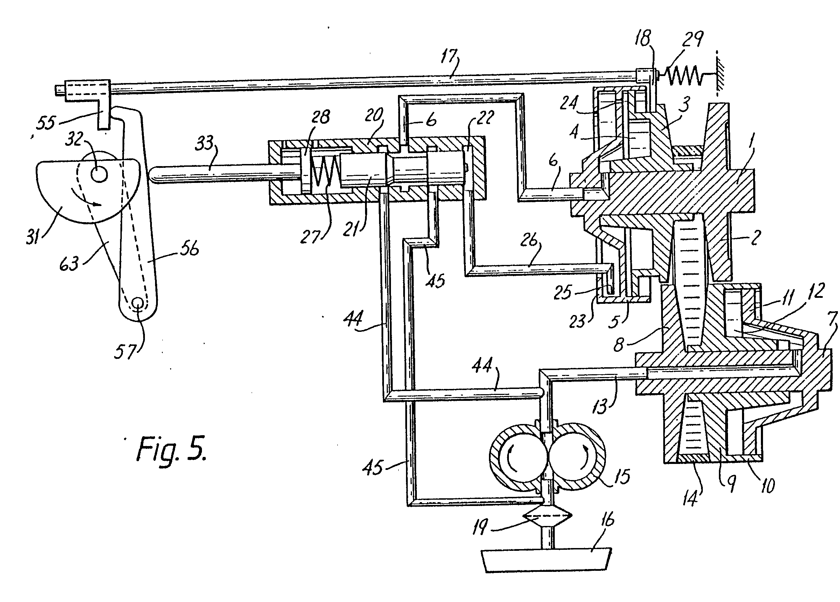

Furthermore, the embodiments are provided with a fluid pump 15 for drawing in and pressurizing fluid from a reservoir 16 via filter 19. Although otherwise many types of pumps may be applied, the pump in the embodiments according to Figs. 1 and 5 should not provide a given volume but a specific pressure, if desired depending on certain parameters.

For signalling the transmission actual ratio, there is disposed a rod 17 which rests through sensor shoe 18 against axially displaceable sheave 3, under load of tension spring 29. Depending on the transmission ratio, rod 17 shifts in axial direction.

The transmission ratio of the infinitely variable transmission (shafts, pulleys and driving belt) is controlled through valve 20 fitted with an axially displaceable valve body 21. Valve body 21 is loaded on the one end by the fluid pressure in space 22, which fluid pressure depends on the primary or input speed of shaft 1. For sensing said speed there is disposed on cylinder 5 a radially outwardly closed annular groove 23, which via opening 24 is filled with fluid from cylinder space 4. The filling may naturally also take place from outside via a separate fluid supply line. By means of Pitot tube 25 the fluid rotating with the primary shaft 1 in groove 23 is converted into a fluid pressure which via line 26 is transmitted to space 22 wherein the fluid pressure is thus dependent on the speed of the primary shaft 1.

On the other end valve body 21 is loaded by the tension of spring 27, which is biased by means of actuation member 28. To this effect the actuation member 28 can be axially displaced.

In the Figures of the described embodiments a shift of valve body 21 to the left results in that fluid flows to cylinder space 4 so that the transmission changes into a lower transmission ratio (input speed/output speed ratio) i.e. the running diameter of the driving belt on the primary pulley 2, 3 increases and that on the secondary pulley 8, 9 decreases accordingly. A shift of valve body 21 to the right on the other hand produces accordingly the change into a higher transmission ratio. The embodiment shown in Fig. 1 will be first elucidated.

According to Fig. 1 the fluid pressurized by pump 15 is conducted via line 54 to valve 20. Depending on the position of valve body 21, subsequently the fluid pressure of line 54, is conducted either via line 6 to cylinder space 4, or via line 13 to cylinder space 12. In the first case the fluid from cylinder space 12 can flow away via line 13 to line 52 and in the second case valve 20 connects the lines 6 and 53 so that the fluid can flow from cylinder space 4 to the low pressure side of pump 15. In the stationary condition valve body 21 will occupy an equilibrium position, wherein the measured input speed (fluid pressure in space 22) corresponds with the desired input speed (the tension of spring 27).

In order to axially displace the actuation member 28, it is provided with a control cam 33 which rests against a displaceable member 62. The member 62 is rotatably connected at one end through pivot 61 to rod 17. Furthermore the other end of member 62 rests against a control cam 31 which is rotatable about a pivot 32. Control cam 31 may be mechanically connected to the throttle pedal or throttle valve of the motor vehicle, so that the rotation position of control cam 31 depends on the position of the throttle pedal, respectively the position of the throttle valve. Also the position of control cam 31 may be set in dependence on the inlet manifold pressure or another parameter or combination of parameters, whether or not electronically processed to a command for the rotation of control cam 31. In the embodiment shown in Fig. 1 the axial position of actuation member 28 consequently depends on both the actual transmision ratio (i.e. the axial position of rod 17) and the rotation position of control cam 31. As a result upon each rotation position of control cam 31, the tension of spring 27 is controlled by the actual transmission ratio, viz. in the sense that at a smaller transmission ratio (i.e. "a higher gear"), at which rod 17 has been displaced to the right, a larger fluid pressure is required in space 22 in order to bring valve body 21 in equilibrium. This smaller transmission ratio consequently is only possible at a greater primary speed (speed of shaft 1) in order that sufficient fluid pressure is effected through Pitot tube 25.

It will be clear that thus, at a stationary position of control cam 31, the engine speed of the vehicle increases during shifting up of the transmission to a lower transmission ratio.

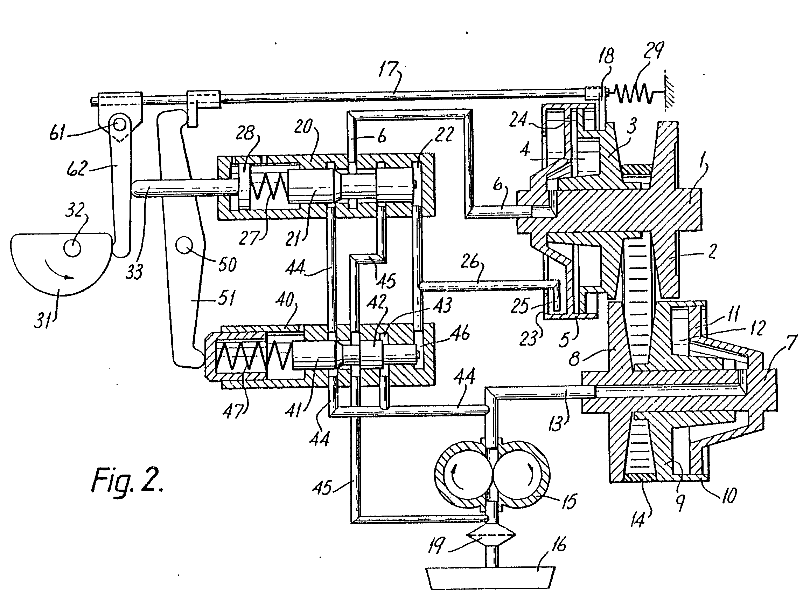

In the embodiments shown in Figs. 2, 3 and 4 there is present an overflow valve 40 for controlling the fluid pressure pressurized by pump 15, which fluid pressure is also present in cylinder space 12. Valve 40 is fitted with an axially displaceable valve body 41. In that valve body 41 is provided with an enlarged portion 42, being in contact with the fluid supplied by pump 15 in space 43, the valve body 41, upon increasing pressure, will be displaced to the left (in the Figures). At sufficient displacement of valve body 41, the fluid in line 44 can flow back via line 45 to the low pressure side of pump 15.

Valve body 41, which thus controls the pressure pressurized by pump 15, is also influenced by the fluid pressure in space 46 depending on the input speed of shaft 1, and by the tension of spring 47, which is biased via rod 17 and the lever 51 rotatable about pivot 50, depending on the prevailing transmission ratio. It will be clear that thus the tension in the driving belt 14 is regulated through the fluid pressure in cylinder space 12, viz. depending on input speed and transmission ratio. However, it is also possible to control said tension accordingly on account of other parameters, e.g. on account of the torque to be transmitted. The hydraulic control principle of the embodiments shown in Figs. 2, 3 and 4 is further described in British patent 1,525,674.

In the embodiments shown in Figs. 2, 3 and 4, the transmission ratio is set in that valve body 21 connects either lines 44 and 6 (displacement of valve body 21 to the left) so that the fluid pressurized by pump 15 can flow via lines 44 and 6 to primary cylinder space 4, or connects lines 6 and 45 (displacement of valve body 21 to the right) so that fluid can flow from cylinder 4 via lines 6 and 45 to the low pressure side of pump 15.

For the displacement of conical sheave 3 of the primary pulley it is naturally required that the effective surface of cylinder-piston unit 3, 5 is larger than that of cylinder-piston unit 10, 11, so that at equal fluid pressure in both cylinder spaces, 4 and 12, the force on conical sheave 3 is larger than that on conical sheave 9. In a stationary condition (non-variable transmission ratio) valve body 21 will be in an equilibrium condition, wherein the fluid pressure in line 6 is lower than that in line 44.

As in the embodiment shown in Fig. 1, in the embodiments of Fig. 2, 3 and 4, a shift of valve body 21 to the left results in that fluid will flow to cylinder space 4 so that the transmission is shifted to a higher gear (that means to a lower transmission ratio), i.e. the running diameter of the driving belt on the primary pulley 2, 3 increases and that on the secondary pulley 8, 9 decreases correspondingly. A shift of valve body 21 to the right on the other hand results in a corresponding shift to a lower gear.

The axial displacement of actuation member 28 in the embodiment shown in Fig. 2 is effected in the same manner as in the embodiment shown in Fig. 1, i.e. depending on the axial displacement of rod 17 (depending on the actual transmission ratio) and depending on the rotation position of control cam 31.

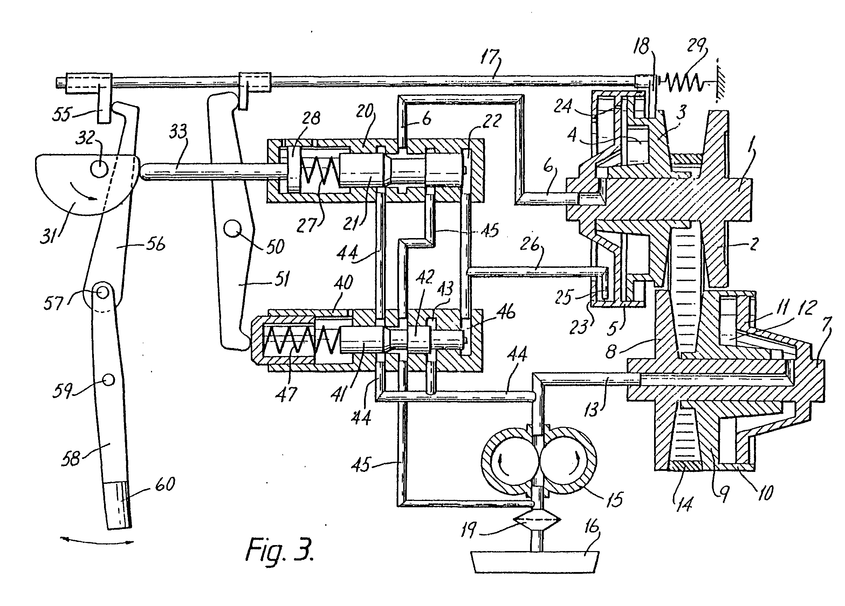

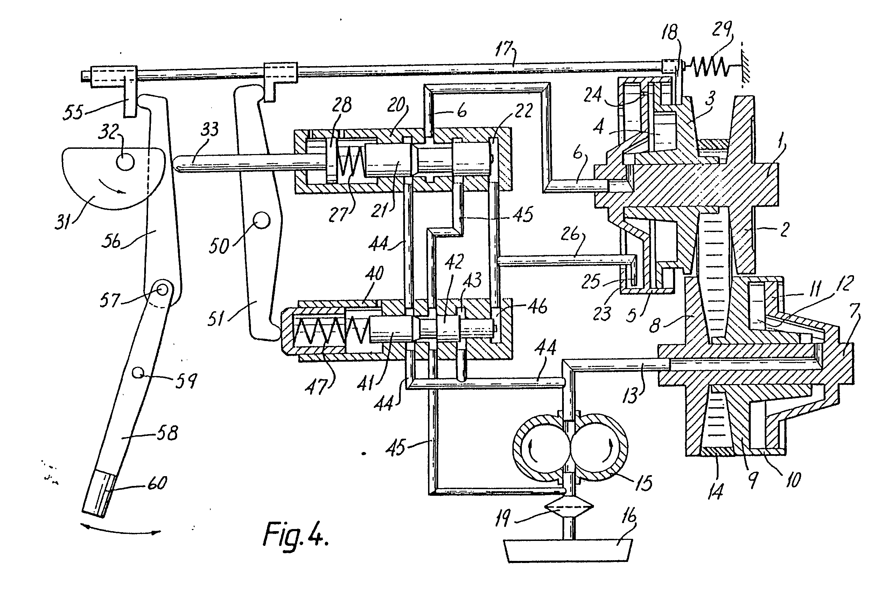

Figs. 3 and 4 show an embodiment wherein the actual ratio-dependent engine speed may be put into operation separately. To this end, there is disposed beside the control cam 31 rotatable about pivot 32, a member 56 which on the one end is displaced by the stop 55 mounted on rod 17 and on the other end may be displaced by the actuation lever 58. Optionally, actuation member 28 may be displaced by control cam 31 (Fig. 3) or by member 56 (Fig. 4).

In the first case (Fig. 3) member 56 is beyond reach of cam follower 33, so that the axial position of actuation member 28 only depends on the rotation position of control cam 31, which e.g. is defined by the position of the throttle pedal of the motor vehicle. The engine speed of the vehicle is consequently only defined by the position of control cam 21.

By moving grip 60 of actuation lever 58 to the left (in the Figure) lever 58 rotates about pivot 59 and pivot point 57 of member 56 is moved to the right. As a result there is produced the situation as shown in Fig. 4, wherein actuation member 28 is displaced, independently of the position of control cam 31, by member 56, which rests against cam follower 33 and stop 55. The engine speed is thereby only controlled depending on the actual transmission ratio.

This may be of relevance in particular when, for instance during driving downhill, braking on the engine takes place, in which case it is desirable that the engine speed, independently of the position of the throttle pedal, is increased. The increase in engine speed is then on the one end depending on the position of actuation lever 58 and on the other end depending on the prevailing transmission ratio (axial position of rod 17). Naturally, lever 58 may be put in any required position.

As clearly shown in Fig. 4, upon sufficient rotation of control cam 31, depending on the position of lever 58, the cam follower 33 will come into contact with control cam 31, whereby the displacement of the actuation member 28 again depends on the (further) rotation of control cam 31.

In the embodiment shown in Figs. 3 and 4, consequently, an engine speed depending on the actual transmission ratio can be put in operation, whereby the extent of speed increase of the engine is adjustable. However, if on account e.g. of the position of the throttle pedal, a higher engine speed is required, a further shift-down will take place through rotation of control cam 31.

Fig. 5 shows an embodiment wherein the overflow valve according to Figs. 2, 3 and 4 is not present. The tension in the driving belt 14 therefore depends on the pressurizing of pump 15, which pressure prevails in cylinder space 13. Furthermore, the hydraulic control functions similarly as that according to Figs. 2, 3 and 4.

Fig. 5 shows the member 56 which on the one end abuts against stop 55 of rod 17, on the other end being connected through pivot point 57 to a member 63 rotatable about pivot 32. The difference with the embodiment shown in Figs. 3 and 4 is the manner in which pivot point 57 is displaced, the operation is otherwise identical. That the rotation of control cam 31 and of members 63 is effected through two axial shafts may offer constructive advantages.

Naturally, it is also possible in the embodiment shown in Fig. 5 to attach the member 56 on the one end pivotally to rod 17, while on the other end member 63 is designed as a cam against which rests member 56. To said cam may then be imparted a desired shape so that a specific relation is created between the rotation of said cam about point 32 and the influencing of member 56 (both as regards the place where member 56 touches said cam and the extent of displacement of member 56).

Naturally, besides the above described embodiments, many other embodiments of the invention are possible.

Furthermore, the Figures of the embodiments do not represent the required fluid lines for possible lubrication and the like of the driving belt and other parts, nor are represented possible restrictions in the fluid lines which, if desired, may be applied.

## Claims

1. A method of controlling the transmission ratio of an infinitely variable transmission of a motor vehicle, the transmission ratio being regulated to set the engine speed dependent on an external signal (31), characterized in that the transmission ratio is regulated to set the engine speed dependent on both the external signal and the actual transmission ratio in such a way that the engine speed respectively increases or decreases when the input/output speed ratio of the transmission respectively decreases or increases.

2. A method according to claim 1, characterized in·that the said increase or decrease of the engine speed is established when the external signal (31) commands an increased engine speed for braking the vehicle.

3. A method according to claim 1 or 2, characterized in that the output (secondary) speed of the transmission is detected and that the said increase or decrease of the engine speed is based on that detected signal.

4. A method according to claim 1 or 2, characterized in that the transmission is provided with a variable driving belt drive with pulleys fitted with mutually displaceable, substantially conical sheaves (2, 3; 8, 9), that the axial position of one of the sheaves is detected and that the said increase or decrease of the engine speed is based on that detected signal.

5. A method according to any one of the preceding claims, characterized in that the said increase or decrease of the engine speed is substantially inversely proportional to the input/output speed ratio of the transmission.

6. An apparatus for controlling the transmission ratio of an infinitely variable transmission of a motor vehicle, provided with setting means (20) for adjusting the transmission ratio dependent on an external signal (31) and on the actual engine speed, and with sensor means (17, 18) for producing a ratio signal representing the actual transmission ratio, characterized by control means (62, 56) for influencing said setting means (20) by said ratio signal as to respectively increase or decrease additionally the engine speed at respectively a decrease or increase of the input/output speed ratio of the transmission.

7. An apparatus according to claim 6, characterized by sensor means for measuring the output (secondary) speed of the transmission and by control means to additionally increase or decrease the engine speed dependent on the measured value.

8. An apparatus according to claim 6, characterized by a variable driving belt drive with pulleys provided with mutually axially displaceable, substantially conical sheaves (2, 3; 8, 9), by sensor means (18, 29) for detecting the axial position of one of the sheaves (3), and by control means (17, 61, 62) to additionally increase or decrease the engine speed dependent on the detected position.

9. An apparatus according to any one of claims 6—8, characterized by a hydraulic valve (20) provided with a valve body (21), which is displaceable under influence of the external signal (31) and the actual engine speed, whereby the position of the valve body (21) is also influenceable by the actual transmission ratio.

10. An apparatus according to claim 9, characterized in that the valve body (21) on the one end (22) is loaded by a force depending on the actual engine speed and on the other end is loaded by a spring (27) of the tensioning of which depends on the axial position of an actuation member (28), whereby the position of the actuation member (28) is also influenceable by the actual transmission ratio.

11. An apparatus according to claim 10, characterized by a lever (62) for displacing the actuation member (28), which lever (62) on the one end is displaceable by a control cam (31) and on the other end (61) is displaceable depending on the actual transmission ratio.

12. An apparatus according to claim 11, characterized by a variable driving belt drive with pulleys provided with mutually axially displaceable, substantially conical sheaves (2, 3; 8, 9), by a sensor member (17, 18, 29) for signalling the axial position of one of the sheaves (3), whereby the lever (62) is displaceable by means of the sensor member (17, 18).

13. An apparatus according to any one of claims 10—12, characterized by means (56, 57, 58, 59, 60) for displacing the actuation member (28), said means (56, 57, 58, 59, 60) can be put into operation for separately displacing the actuation member (28) dependent on the actual transmission ratio for obtaining an increased engine speed.

14. An apparatus according to claim 13, characterized in that the means for displacing the actuation member (28) comprise a rotary control cam (31) and that the means which can be put into operation comprise a member (63) rotatable coaxially with the control cam (31), said member (63) bringing a lever (56) into contact with the actuation member (28), said lever (56) being displaceable on the other end by a sensor member (17, 18, 55) for detecting the actual transmission ratio.

**Revendications**

1. Procédé pour commander le rapport de transmission d'une transmission à variation continue d'un véhicule à moteur, le rapport de transmission étant regulé pour régler la vitesse du moteur un fonction d'un signal externe (31), caractérisé en ce que le taux de transmission est régulé pour régler la vitessedu moteur en fonction à la fois du signal externe et du rapport de transmission effectif de manière que la vitesse du moteur augmente ou diminue respectivement lorsque le rapport vitesse d'entrée/votesse de sortie de la transmission diminue ou augmente respectivement.

2. Procédé selon la revendication 1, caractérisé en ce que ladite augmentation ou diminution de la vitesse du moteur est établie quand le signal externe (31) commande une vitesse plus élevée du moteur pour freiner le véhicule.

3. Procédé selon la revendication 1 ou 2, caractérisé en ce que la vitesse de sortie (secondaire) de la transmission est détectée et en ce que ladite augmentation ou diminution de la vitesse du moteur est basée sur ce signal détecté.

4. Procédé selon la revendication 1 ou 2, caractérisé en ce que la transmission est munie d'un entraînement variable à courroie d'entraînement avec des poulies comprenant des réas ou disques (2, 3; 8, 9) sensiblement coniques et mutuellement mobiles, en ce que la position axiale de l'un des disque est détectée et en ce que ladite augmentation ou diminution de vitesse du moteur est basée sur ce signal détecté.

5. Procédé selon l'une quelconque des revendications précédentes, caractérisé en ce que ladite augmentation ou diminution de vitesse du moteur est sensiblement inversement proportionnelle au rapport vitesse d'entrée/vitesse de sortie de la transmission.

6. Dispositif de commande du rapport de transmission d'une transmission continue d'un véhicule à moteur, muni de moyens de réglage (20) pour ajuster le rapport de transmission en fonction d'un signal externe (31) et de la vitesse effective du moteur, et de moyens détecteurs (17, 18) pour produire un signal de rapport représentant le rapport de transmission effectif, caractérisé par des moyens de commande (62, 56) destinés à avoir une influence sur lesdits moyens de réglage (20) au moyen dudit signal de rapport en ce qui concerne respectivement une augmentation ou diminution additionnelle de la vitesse du moteur pour respectivement une diminution ou une augmentation du rapport vitesse d'entrée/vitesse de sortie de la transmission.

7. Dispositif selon la revendication 6, caractérisé par des moyens détecteurs pour mesurer la vitesse de sortie (secondaire) de la transmission et par des moyens de commande pour augmenter ou diminuer additionnellement la vitesse du moteur en fonction de la valeur mesurée.

8. Dispositif selon la revendication 6, caractérisé par un entraînement variable à courroie d'entraînement comprenant des poulies munies de réas ou disques (2, 3; 8, 9) sensiblement coniques et mutuellement mobiles en direction axiale, par des moyens détecteurs (18, 29) pour détecter la position axiale de l'un des disques (3), et par des moyens de commande (17, 61, 62) pour augmenter ou diminuer additionnellement la vitesse du moteur en fonction de la position détectée.

9. Dispositif selon l'une quelconque des revendications 6 à 8, caractérisé par une soupape hydraulique (20) munie d'un corps de soupape (21) qui est mobile sous l'influence du signal externe (31) et de la vitesse effective du moteur, ce grâce à quoi la position du corps de soupape (21) est également sous l'influence du taux de transmission effectif.

10. Dispositif selon la revendication 9, caractérisé en ce que le corps de soupape (21) est chargé à une extrémité (22) par une force qui dépend de la vitesse effective du moteur et à l'autre extrémité par un ressort (27) dont la tension dépend de la position axiale d'un organe de manoeuvre (28), ce grâce à quoi la position de l'organe de manoeuvre (28) est également sous l'influence du rapport de transmission effectif.

11. Dispositif selon la revendication 10, caractérisé par un levier (62) destiné à déplacer l'organe de manoeuvre (28), lequel levier (62) peut être déplacé à une extrémité par une came de commande (31) et peut être déplacé à l'autre extrémité (61) en fonction du rapport de transmission effectif.

12. Dispositif selon la revendication 11, caractérisé par un entraînement variable à courroie d'entraînement comprenant des poulies munies de réas ou disques (2, 3; 8, 9) sensiblement coniques et mutuellement mobiles en direction axiale, par un organe détecteur (17, 18, 29) pour signaler la position axiale de l'un des disques (3), ce grâce à quoi le levier (62) est déplaçable au moyen de l'organe détecteur (17, 18).

13. Dispositif selon l'une quelconque des revendications 10 à 12, caractérisé par des moyens (56, 57, 58, 59, 60) pour déplacer l'organe de manoeuvre (28), lesdits moyens (56, 57, 58, 59, 60) pouvant être mis en fonctionnement pour déplacer séparément l'organe de manoeuvre (28) en fonction du rapport de transmission effectif pour obtenir une vitesse plus élevée du moteur.

14. Dispositif selon la revendication 13, caractérisé en ce que les moyens pour déplacer l'organe de manoeuvre (28) comprennent une came de commande rotative (31) et en ce que les moyens qui peuvent être mis en fonctionnement comprennent un organe (63) pouvant tourner coaxialement avec la came de commande (31), ledit organe (63) amenant un levier (56) en contact avec l'organe de manoeuvre (28), ledit levier (56) pouvant être déplacé sur son autre extrémité par un organe détecteur (17, 18, 55) pour détecter le rapport de transmission effectif.

**Patentansprüche**

1. Verfahren zur Steuerung des Uebersetzungsverhältnisses eines stufenlos regelbaren Getriebes eines Kraftfahrzeuges, bei dem das Uebersetzungsverhältnis geregelt wird, um die Motordrehzahl in Abhängigkeit von einem äusseren Signal (31) einzustellen, dadurch gekennzeichnet, dass das Uebersetzungsverhältnis zum Einstellen der Motordrehzahl in Abhängigketi sowohl vom äusseren Signal als auch vom Istwert des Uebersetzungsverhältnisses derart geregelt wird, dass die Motordrehzahl zunimmt, bzw. abnimmt, wenn das Verhältnis der Eingangsdrehzahl zur Ausgangsdrehzahl des Getriebes abnimmt, bzw. zunimmt.

2. Verfahren nach Anspruch 1, dadurch gekennzeichnet, dass die genannte Zunahme oder Abnahme der Motordrehzahl bewirkt wird, wenn das äussere Signal (31) eine höhere Motordrehzahl zum Bremsen des Fahrzeugs befiehlt.

3. Verfahren nach Anspruch 1 oder 2, dadurch gekennzeichnet, dass die Ausgangsdrehzahl (Sekundärdrehzahl) des Getriebes festgestellt wird, und dass die genannte Zunahme oder Abnahme der Motordrehzahl aufgrund des Feststellungssignal erfolgt.

4. Verfahren nach Anspruch 1 oder 2, dadurch gekennzeichnet, dass das Getriebe mit einem regelbaren Riementrieb mit Riemenscheiben, die gegeneinander verschiebbare, im wesentlichen konische Scheiben haben (2, 3; 8, 9), ausgerüstet ist, und dass die axiale Stellung einer der Scheiben festgestellt wird, und dass die genannte Zunahme oder Abnahme der Motordrehzahl auf dieser Feststellung beruht.

5. Verfahren nach einem der vorhergenden Ansprüche, dadurch gekennzeichnet, dass die genannte Zunahme oder Abnahme der Motordrehzahl dem Verhältnis der Eingangs zur Ausgangsdrehzahl des Getriebes im wesentlichen umgekehrt proportional ist.

6. Vorrichtung zur Steuerung des Uebersetzungsverhältnisses eines stufenlos regelbaren Getriebes eines Kraftfahrzeuges, mit Einstellmitteln (20) zum von einem äusseren Signal (31) und vom Istwert der Motordrehzahl abhängigen Einstellen der Uebersetzungsverhältnisses und mit Sensor-Mitteln (17, 18) zur Erzeugung eines der Istwert des Uebersetzungsverhältnisses angebenden Verhältnis-Signals, gekennzeichnet durch Steuermittel (62, 56) zur Beeinflussung der Einstellmittel (20) durch das genannte Verhältnis-Signal, so dass die Motordrehzahl bei einer Abnahme bzw. Zunahme des Verhältnisses der Eingangs- zur Ausgangsdrehzahl des Getriebes zusätzlich zu- bzw. abnimmt.

7. Vorrichtung nach Anspruch 6, gekennzeichnet durch Sensor-Mittel zur Messung der Ausgangsdrehzahl (Sekundärdrehzahl) des Getriebes und durch Steuermittel zur zusätzlichen Erhöhung bzw. Herabsetzung der Motordrehzahl in Abhängigkeit vom den gemessenen Wert.

8. Vorrichtung nach Anspruch 6, gekennzeichnet durch einen regelbaren Riementrieb mit Riemenscheiben mit axial gegeneinander verschiebbaren, im wesentlichen konischen Scheiben (2, 3; 8, 9), Sensor-Mittel (18, 29) zur Feststellung der axialen Stellung einer der Scheiben (3) und Steuermittel (17, 61, 62) zur zusätzlichen Erhöhung oder Herabsetzung der Motordrehzahl in Abhängigkeit von der festgestellten Stellung.

9. Vorrichtung nach einem der Ansprüche 6 bis 8, gekennzeichnet durch ein hydraulisches Ventil (20) mit einem Verschlussstück (21), das unter der Wirkung des äusseren Signals (31) und der augenblicklichen Motordrehzahl bewegbar ist, wobei der Stellung des Verschlussstückes (21) auch durch den Istwert des Uebersetzungsverhältnisses beeinflussbar ist.

10. Vorrichtung nach Anspruch 9, dadurch gekennzeichnet, dass das Ventil-Verschlussstück (21) an einem Ende (22) durch eine vom Istwert der Motordrehzahl abhängige Kraft und am anderen Ende durch eine Feder (27), deren Spannung von der axialen Stellung eines Betätigungsgliedes (28) abhängt belastet ist, wobei die Stellung des Betätigungsgliedes (28) auch durch den Istwert des Uebersetzungsverhältnisses beeinflussbar ist.

11. Vorrichtung nach Anspruch 10, gekennzeichnet durch einen Hebel (62) zum Bewegen des Betätigungsgliedes (28), welcher Hebel (62) an einem Ende durch einen Steuernocken (31) und am anderen Ende (61) in Abhängigkeit vom Istwert des Uebersetzungsverhältnisses bewegbar ist.

12. Vorrichtung nach Anspruch 11, gekennzeichnet durch einen regelbaren Riementrieb mit Riemenscheiben mit gegeneinander axial verschiebbaren im wesentlichen konischen Scheiben (2, 3; 8, 9), ein Sensor-Glied (17, 18, 29) zur Angabe der axialen Stellung einer dieser Scheiben (3), wobei der Hebel (62) mittels des Sensor-Gliedes (17, 18) bewegbar ist.

13. Vorrichtung nach einem der Ansprüche 10 bis 12, gekennzeichnet durch Mittel (56, 57, 58, 59, 60) zum Bewegen des Betätigungsgliedes (28), welche Mittel (56, 57, 58, 59, 60) zur getrennten Bewegung des Betätigungsgliedes (28) in Abhängigkeit vom Istwert des Uebersetzungsverhältnisses zur Erzielung einer erhöhten Motordrehzahl in Betrieb setzbar ist.

14. Vorrichtung nach Anspruch 13, dadurch gekennzeichnet, dass die Mittel zur Bewegung des Betätigungsgliedes (28) einen drehbaren Steuernocken (31) und die in Betrieb setzbaren Mittel ein koaxial mit dem Steuernocken (31) drehbares Glied (63) aufweisen, das den Hebel (56) in Berührung mit dem Betätigungsglied (28) bringt, und dass der Hebel (56) am anderen Ende durch ein Sensor-Glied (17, 18, 55) zur Feststellung des Istwertes des Uebersetzungsverhältnisses bewegbar ist.

Fig. 1.

Fig. 2.

Fig. 3.

Fig.4.

0 011 342

Fig. 5.